**Europäisches Patentamt**

**European Patent Office**

**Office européen des brevets**

(11) Veröffentlichungsnummer: **0 306 736**
**A2**

(12) # EUROPÄISCHE PATENTANMELDUNG

(21) Anmeldenummer: **88113282.3**

(51) Int. Cl.⁴: **H04L 11/00**

(22) Anmeldetag: **16.08.88**

(30) Priorität: **08.09.87 DE 3730106**

(43) Veröffentlichungstag der Anmeldung:
**15.03.89 Patentblatt 89/11**

(84) Benannte Vertragsstaaten:
**AT BE DE FR IT SE**

(71) Anmelder: **Siemens Aktiengesellschaft Berlin und München**
**Wittelsbacherplatz 2**
**D-8000 München 2(DE)**

(72) Erfinder: **Schumacher, Hinrich, Ing.(Grad.)**
**Heinleinstrasse 21**
**D-8000 München 71(DE)**
Erfinder: **Flüter, Heribert, Dipl.-Math.**
**Jawelinskystrasse 5**
**D-8000 München 71(DE)**

(54) **Verfahren zum Übertragen von in einer Fernmeldevermittlungsanlage gespeicherten Verbindungsinformationen zu einer Informationsverarbeitungsanlage.**

(57) In einem Zwischenspeicher (PS) der Fernmeldevermittlungsanlage (EDS) werden Verbindungsinformationen in verbindungsindividuellen Datensätzen gespeichert. Dieser Zwischenspeicher wird fortlaufend auf das Vorhandensein von Datensätzen überprüft. Liegt wenigstens ein solcher Datensatz vor, so wird dieser nach einem gesicherten Übertragungsverfahren zu zwei gesonderten Verarbeitungseinrichtungen (PC1 und PC2) einer Informationsverarbeitungsanlage (RDE) hin übertragen und dort in eine Speicheranordnung (MP1 bzw. MP2) übernommen. Quittiert lediglich eine der Verarbeitungseinrichtungen (z. B. PC1) einen fehlerfreien Empfang eines Datensatzes, so wird dieser ein Steuersignal (ST2) von der Fernmeldevermittlungsanlage her zugeführt, auf welches hin der gerade empfangene Datensatz in die Speicheranordnung der anderen Verarbeitungseinrichtung (PC2) kopiert wird.

FIG 1

EP 0 306 736 A2

## Verfahren zum Übertragen von in einer Fernmeldevermittlungsanlage gespeicherten Verbindungsinformationen zu einer Informationsverarbeitungsanlage

Die Erfindung betrifft ein Verfahren zum Übertragen von über eine Fernmeldevermittlungsanlage, insbesondere eine Datenvermittlungsanlage, verlaufende Verbindungen betreffenden Informationen, welche in der Fernmeldevermittlungsanlage verbindungsindividuell ermittelt und in verbindungsindividuellen Datensätzen in einem Zwischenspeicher zwischengespeichert werden, zu einer mit der Fernmeldevermittlungsanlage verbundenen Informationsverarbeitungsanlage.

Es ist bereits bekannt (Der Dienst bei der Deutschen Bundespost, Teilband 4, Datenvermittlungstechnik (EDS), R.v. Decker's Verlag G. Schenk, Heidelberg, Hamburg 1987, Seiten 232 bis 242), in einer Datenvermittlungsanlage für jede der über diese verlaufenden Verbindungen sogenannte Rufdaten zu ermitteln und zwischenzuspeichern. Diese Rufdaten dienen beispielsweise für eine Gebührenermittlung für die einzelnen Verbindungen bzw. für eine Verkehrswerterfassung. Für die Ermittlung der Rufdaten wird bei jedem Verbindungsaufbau ein sogenannter Anfangssatz erstellt, in welchem u. a. neben einer Kennung für den die jeweilige Verbindung wünschenden Teilnehmer (rufender Teilnehmer) die den gewünschten Teilnehmer (gerufener Teilnehmer) bezeichnenden Wahlinformationen und Angaben bezüglich des Zeitpunktes des Beginns der Gebührenpflicht sowie der Art der Gebührenberechnung gespeichert sind. Bei Abbau der jeweiligen Verbindung wird dann ein weiterer sogenannter Endesatz erstellt, welcher beispielsweise neben der Kennung für den rufenden Teilnehmer Angaben bezüglich des Endzeitpunktes der Gebührenpflicht enthält.

Anfangs- und Endesätze werden dabei jeweils getrennt in einen Ausgangspuffer übertragen und verbleiben dort bis dieser vollständig gefüllt ist. Ist dieser Zustand des Ausgangspuffers erreicht, werden die darin gespeicherten Anfangs- und Endesätze in einen Plattenspeicher der Datenvermittlungsanlage übernommen. Für eine spätere Verarbeitung der in diesem Plattenspeicher in Form von Anfangs- und Endesätzen gespeicherten Rufdaten werden diese zu einem Rufdatenrechner übertragen. Für diese Übertragung ist eine nicht näher erläuterte Datenübertragungsprozedur vorgesehen.

Darüber hinaus ist es bereits bekannt (Heidelberger Taschenbücher, Datenfernverarbeitung, H. Hofer, Springer-Verlag, Berlin, Heidelberg, New York 1978, Seiten 128 bis 133), daß für eine Übertragung von in einer Datenstation vorliegenden Datenblöcken zu einer Außenstelle hin die Datenstation zunächst ein Anforderungssignal an die Außenstelle abgibt. Die Außenstelle antwortet, falls sie zur Datenaufnahme bereit ist, mit einer positiven Rückmeldung. Auf diese Rückmeldung hin erfolgt die Übertragung eines Datenblockes. Der Empfang dieses Datenblockes wird von der Außenstelle her durch Abgabe eines Quittungssignals, welches Aufschluß über den Empfang des Datenblockes gibt, bestätigt.

Es ist nun Aufgabe der vorliegenden Erfindung, einen Weg zu zeigen, wie ein Verfahren der eingangs genannten Art ausgebildet werden kann, um mit einem geringen Steuerungsaufwand in der Fernmeldevermittlungsanlage eine sichere Übertragung von in dieser vorliegenden, Verbindungen betreffende Informationen zu einer Informationsverarbeitungsanlage hin zu ermöglichen.

Gelöst wird die vorstehend aufgezeigte Aufgabe bei einem Verfahren der eingangs genannten Art durch die im kennzeichnenden Teil des Patentanspruches 1 angegebenen Verfahrensmerkmale.

Die Erfindung bringt den Vorteil mit sich, daß die in der Fernmeldevermittlungsanlage anfallenden Datensätze fortlaufend zu der Informationsverarbeitungsanlage hin übertragbar sind, so daß im Vergleich zum Stand der Technik mit einem relativ kleinen Zwischenspeicher in der Fernmeldevermittlungsanlage ausgekommen werden kann. Als Zwischenspeicher kann beispielsweise ein festgelegter Bereich des Arbeitsspeicher einer speicherprogrammierten Fernmeldevermittlungsanlage dienen. Ein weiterer Vorteil der Erfindung besteht darin, daß die Datensätze für eine spätere Verarbeitung nicht nur in der Informationsverarbeitungsanlage in voneinander unabhängigen Speicherordnungen redundant gespeichert werden, sondern daß die einzelnen Datensätze von der Fernmeldevermittlungsanlage aus über gesonderte Übertragungswege zu zwei voneinander unabhängigen Verarbeitungseinrichtungen der Informationsverarbeitungsanlage übertragen werden. Damit ist beispielsweise auch bei Ausfall eines der Übertragungswege bzw. bei Ausfall einer der Verarbeitungseinrichtungen eine Übertragung von Datensätzen zu der nicht von einem Ausfall betroffenen Verarbeitungseinrichtung möglich. Die Fernmeldevermittlungsanlage ist somit bezüglich der Verwaltung dieser Datensätze entlastet. Die übertragenen Datensätze können dann ohne Einbeziehung der Fernmeldevermittlungsanlage im Falle eines Ausfalls eines der Übertragungswege sofort, im Falle eines Ausfalls einer Verarbeitungseinrichtung nach deren Instandsetzung unter der Steuerung der nicht von einem Ausfall betroffenen Verarbeitungseinrichtung redundant gespeichert werden.

Vorteilhafte Ausgestaltungen der Erfindung ergeben sich aus den Unteransprüchen.

Im folgenden wird nun die Erfindung anhand von Zeichnungen beispielsweise näher beschrieben.

FIG 1 zeigt eine Datenvermittlungsanlage, in welcher das Verfahren gemäß der vorliegenden Erfindung angewandt ist, und

FIG 2 und 3 zeigen Zeitdiagramme, auf die im Zuge der Beschreibung der Erfindung eingegangen wird.

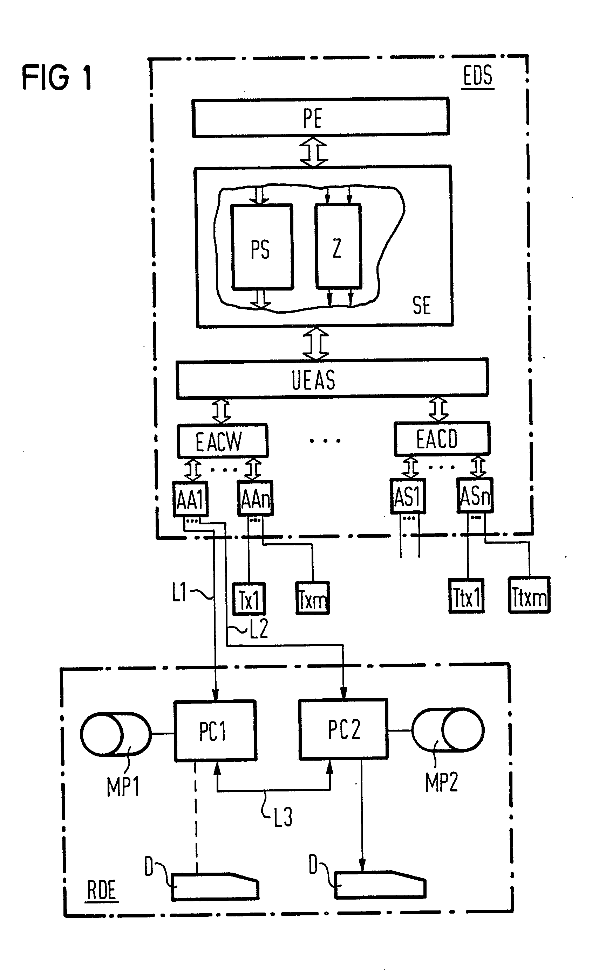

In FIG 1 ist eine Datenvermittlungsanlage EDS ausschnittweise dargestellt, welche allgemein für die Vermittlung von Datensignalen dient. Unter diese Datensignale fallen dabei beispielsweise auch Fernschreibzeichen oder Sprachsignale in digital codierter Form. Von der Datenvermittlungsanlage sind zwei verschiedene Gruppen von Anschlußschaltungen dargestellt. Zu einer ersten Gruppe gehören dabei die Anschlußschaltungen AA1 bis AAn, von denen in FIG 1 lediglich die Anschlußschaltungen AA1 und AAn angedeutet sind. Diese Anschlußschaltungen dienen dazu, digitale Datensignale, die nach einem asynchronen Übertragungsverfahren übertragen werden, zu verarbeiten. Beispielsweise sind somit an diese Anschlußschaltungen übliche Fernschreib- bzw. Telex- Teilnehmerendgeräte anschließbar. In FIG 1 sind mit der Anschlußschaltung AAn mit Tx1 bis Txm bezeichnete Telex-Teilnehmerendgeräte verbunden.

Die zweite Gruppe von Anschlußschaltungen umfaßt die Anschlußschaltungen AS1 bis ASn. Von diesen sind in FIG 1 lediglich die Anschlußschaltungen AS1 und ASn dargestellt. Diese Anschlußschaltungen verarbeiten digitale Datensignale in Form von Bitgruppen (Envelopes), die nach einem synchronen Übertragungsverfahren übertragen werden. Beispielsweise können diese Anschlußschaltungen digitale Datensignale entsprechend dem internationalen Alphabet IA Nr. 5 abgeben und aufnehmen. An diese Anschlußschaltungen sind somit beispielsweise sogenannte Bürofernschreibmaschinen anschließbar, die auch als Teletex-Teilnehmerendgeräte bezeichnet werden. In FIG 1 sind an die Anschlußschaltung ASn mit Ttx1 bis Ttxm bezeichnete Teletex-Teilnehmerendgeräte angeschlossen.

Bezüglich der zuvor genannten Anschlußschaltungen sei darauf hingewiesen, daß diese jeweils mit einer Vielzahl von Übertragungsleitungen verbunden sind, die als Teilnehmerleitungen für den Anschluß von beispielsweise Telex-Teilnehmerendgeräten bzw. Teletex-Teilnehmerendgeräten oder als Amtsverbindungsleitungen benutzbar sind, über welche beispielsweise jeweils zwei Datenvermittlungsanlagen miteinander in Verbindung stehen.

Neben den zuvor genannten Anschlußschaltungen sind als Schaltungsteile der Datenvermittlungsanlage EDS noch mit den Anschlußschaltungen verbundene Eingabe-/Ausgabe-Codewandler EACD und EACW, eine Übertragungsablaufsteuerung UEAS, eine Speichereinheit SE und schließlich eine Programmsteuereinheit PE angegeben. Auf das Zusammenwirken dieser Schaltungsteile wird hier nicht näher eingegangen, da dies bereits hinlänglich bekannt ist (siehe beispielsweise "Siemens-Zeitschrift", Heft 2, 1977, Seiten 82 bis 87).

Von der genannten Speichereinheit SE sind für die Erläuterung des Verfahrens gemäß der vorliegenden Erfindung lediglich ein Pufferspeicher PS und eine steuerbare Zähleranordnung Z dargestellt.

An die genannte Anschlußschaltung AA1 ist eine Rufdatenverarbeitungsanlage RDE über zwei Übertragungsleitungen L1 und L2 angeschlossen. Diese Übertragungsleitungen sind jeweils als Standleitung benutzt. Die Rufdatenverarbeitungsanlage weist zwei voneinander unabhängige Mikroprozessoranordnungen PC1 und PC2 auf, die jeweils mit einer der gerade genannten Übertragungsleitungen in Verbindung stehen. Die Mikroprozessoranordnung PC1 möge beispielswseise mit der Übertragungsleitung L1 und die Mikroprozessoranordnung PC2 mit der Übertragungsleitung L2 verbunden sein. Diese Mikroprozessoranordnungen, die beispielsweise jeweils durch einen Personalcomputer gebildet sein mögen, weisen jeweils eine externe Speicheranordnung auf. Bei diesen Speicheranordnungen kann es sich beispielsweise um Magnetplattenspeicher handeln. In FIG 1 ist die der Mikroprozessoranordnung PC1 zugehörige Speicheranordnung mit MP1 bezeichnet. Die mit der Mikroprozessoranordnung PC2 verbundene Speicheranordnung trägt dagegen die Bezeichnung MP2.

Die zuvor genannten Mikroprozessoranordnungen PC1 und PC2 stehen miteinander über eine Verbindungsleitung L3 in Verbindung. Außerdem ist an jede der Mikroprozessoranordnungen eine Ausgabeeinrichtung beispielswseise in Form eines Druckers D anschließbar.

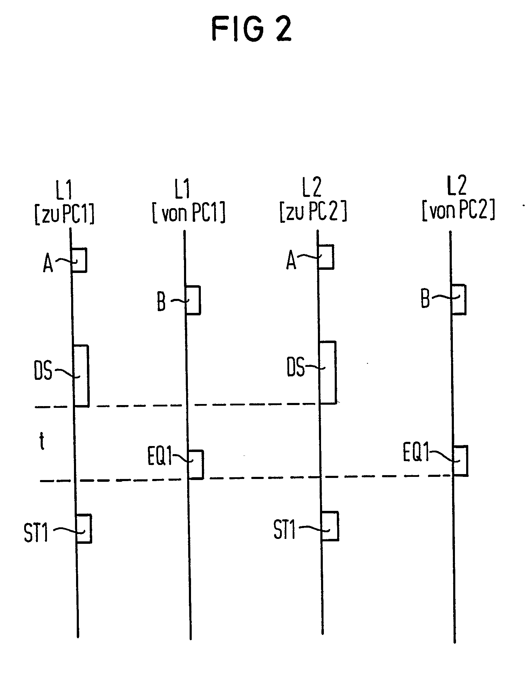

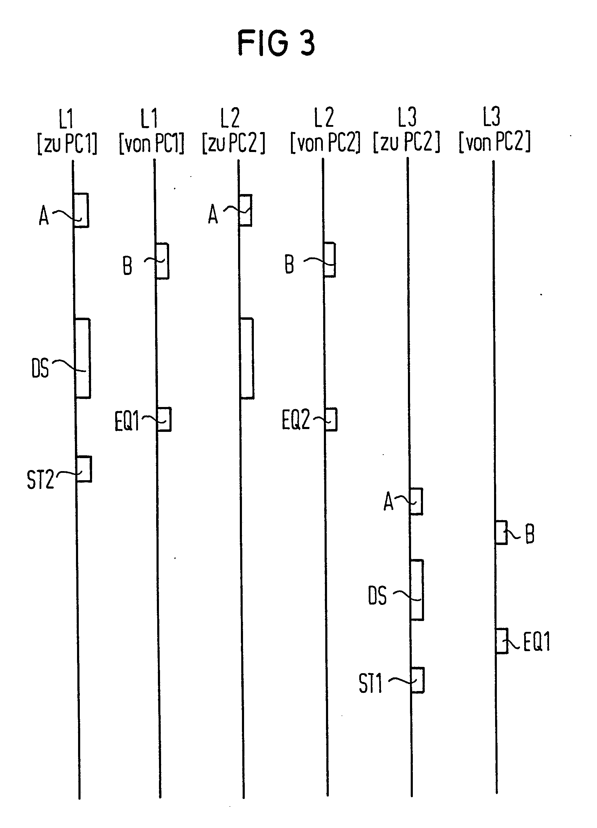

Nachdem zuvor der Aufbau der in FIG 1 dargestellten Schaltungsanordnung erläutert worden ist, wird nunmehr näher auf das Verfahren gemäß der vorliegenden Erfindung anhand der FIG 2 und 3 eingegangen.

Von der Datenvermittlungsanlage EDS wird für jede der über sie verlaufenden Verbindungen unter Steuerung der Programmsteuereinheit PE ein Datensatz erstellt, der die eingangs erwähnten Informationen für eine spätere Gebührenermittlung und ggf. für eine Verkehrsstatistik enthält. Die einzelnen Datensätze werden in der Reihenfolge ihrer Erstellung in den bereits genannten Pufferspeicher PS übertragen. Dieser Pufferspeicher wird fortlaufend hinsichtlich des Vorhandenseins von gespeicherten Datensätzen überprüft. Liegt wenigstens ein solcher Datensatz in dem Pufferspeicher vor, so wird von der Datenvermittlungsanlage EDS wiederum unter der Steuerung der Programmsteuereinheit PE ein Anforderungssignal A (FIG 2) über die Standleitungen L1 und L2 zu den Mikroprozessoranordnungen PC1 und PC2 (FIG 1) der Rufdatenverarbeitungsanlage hin übertragen. Ein solches Anforderungssignal ist beispielsweise, wie auch die nachfolgenden noch aufgeführten, über die beiden Standleitungen zu übertragenden Signale, aus einer festgelegten Bitfolge gebildet.

Die beiden Mikroprozessoranordnungen PC1 und PC2 geben bei ihrer Bereitschaft für die Aufnahme eines Datensatzes, die hier für beide vorliegen möge, jeweils ein Bereitmeldungssignal (B in FIG 2) ab. Auf das Eintreffen dieser Bereitmeldungssignale hin wird in der Datenvermittlungsanlage EDS der als nächste zu übertragende Datensatz in dem Pufferspeicher PS kopiert und zu den beiden Mikroprozessoranordnung hin übertragen. (DS in FIG 2). Diese überprüfen daraufhin den gerade empfangenen Datensatz hinsichtlich einer fehlerfreien Übertragung. Dem Datensatz mögen dafür von der Datenvermittlungsanlage her Sicherungsinformationen beispielsweise in Form von Prüfzeichen beigefügt sein, die eine derartige Überprüfung gestatten. Es sind bereits verschiedene Verfahren für die Überprüfung von übertragenen Datensignalen anhand von Sicherungsinformationen bekannt, so daß hier nicht näher darauf eingegangen werden muß. Als Beispiele seien hier lediglich Sicherungsverfahren mit Hilfe von Paritätsbits oder Blocksicherungsverfahren genannt.

Nach der gerade erwähnten Überprüfung des empfangenen Datensatzes in den beiden Mikroprozessoranordnungen PC1 und PC 2 wird von diesen der betreffende Datensatz in die zugehörige Speicheranordnung MP1 bzw. PM2 abgespeichert. Anschließend gibt jede der beiden Mikroprozessoranordnungen ein Quittungssignal (EQ1 in FIG 2) über die jeweils zugehörige Standleitung an die Datenvermittlungsanlage ab. Aus diesen Quittungssignalen geht jeweils das Ergebnis der zuvor genannten Überprüfung des empfangenen Datensatzes hervor (positives bzw. negatives Quittungssignal). Zeigen die Quittungssignale dabei an, daß in beiden Mikroprozessoranordnungen der übertragene Datensatz fehlerfrei empfangen worden ist, so schließt die Datenvermittlungsanlage EDS den Übertragungsvorgang mit der Abgabe eines Steuersignals ST1 (FIG 2) an beide Mikroprozessoranordnungen ab. Dieses Steuersignal zeigt an, daß in den beiden Mikroprozessoranordnungen der Datensatz für eine weitere Verarbeitung fehlerfrei empfangen worden ist. Auf die Abgabe dieses Steuersignals hin wird im übrigen der bis dahin noch im Pufferspeicher PS der Datenvermittlungsanlage gespeicherte Datensatz gelöscht.

In FIG 3 ist nun der Fall dargestellt, daß ein von der Datenvermittlungsanlage EDS übertragener Datensatz lediglich von einer der Mikroprozessoranordnungen fehlerfrei empfangen werden konnte. Dies möge beispielsweise die Mikroprozessoranordnung PC1 sein. Diese quittiert in der zuvor beschriebenen Weise durch Abgabe eines Quittungssignals EQ1 (positives Quittungssignal) den Empfang des Datensatzes. Die Mikroprozessoranordnung PC2 gibt dagegen ein Quittungssignal EQ2 ab, welches einen fehlerhaften Empfang anzeigt (negatives Quittungssignal). Die Datenvermittlungsanlage EDS gibt auf den Empfang dieser Quittungssignale jetzt lediglich an diejenige Mikroprozessoranordnung ein Steuersignal ST2 ab, von welcher zuvor das positive Quittungssignal empfangen worden ist. Dies ist im vorliegenden Beispiel also die Mikroprozessoranordnung PC1.

Durch das gerade genannte Steuersignal ST2 wird der Mikroprozessoranordnung PC1 mitgeteilt, daß lediglich von dieser der übertragene Datensatz fehlerfrei empfangen worden ist. Auf dieses Steuersignal hin kopiert nun die Mikroprozessoranordnung PC1 den zuvor von ihr empfangenen und in der Speicheranordnung MP1 gespeicherten Datensatz und überträgt diesen kopierten Datensatz zu der Mikroprozessoranordnung PC2 hin, die diesen Datensatz in die Speicheranordnung MP2 übernimmt. Für diese Übertragung, die ohne Einbeziehung der Datenvermittlungsanlage EDS erfolgt, wird die bereits genannte Verbindungsleitung L3 (FIG 1) benutzt. Dabei können beispielsweise über diese Verbindungsleitung zwischen den beiden Mikroprozessanordnungen den für die Abgabe eines Datensatzes von der Datenvermittlungsanlage her verwendeten, zuvor erläuterten Signalen entsprechende Signale ausgetauscht werden, wie es in FIG 3 angedeutet ist. Nach Abschluß dieser Übertragung steht dann der zuvor von der Datenvermittlungsanlage abgegebene Datensatz in den beiden Speicheranordnungen MP1 und MP2 (FIG2) für eine weitere Verarbeitung zur Verfügung.

Abweichend von der gerade erläuterten Abgabe eines Datensatzes von der Mikroprozessoranordnung PC1 aus kann auch so vorgegangen sein, daß auf den Empfang des Steuersignals ST2 hin zunächst lediglich der gerade empfangene Datensatz in der Speicheranordnung MP1 als ein zu übertragender Datensatz markiert wird und daß diese Speicheranordnung durch Eingabe eines Bedienkommandos hinsichtlich des Vorliegens eines solchen Datensatzes abfragbar ist.

Bei Vorliegen eines solchen Datensatzes kann dann beispielsweise durch Eingabe eines Übertragungskommandos eine Übertragung in der zuvor erläuterten Weise über die Verbindungsleitung L3 (FIG 3) erfolgen. Für den Fall, daß die beiden Mikroprozessoranordnungen jeweils über ein Disketten-Laufwerk verfügen, besteht eine weitere Möglichkeit darin, daß durch Eingabe des zuvor genannten Übertragungskommandos in der Mikroprozessoranordnung PC1 der zu übertragende Datensatz zunächst auf eine Diskette übernommen wird. Der Disketteninhalt kann dann nach Einsetzen der betreffenden Disketten in das Disketten-Laufwerk der Mikroprozessoranordnung PC2 in die Speicheranordnung MP2 übernommen werden.

Bezüglich der Übertragung eines Datensatzes von der Datenvermittlungsanlage EDS her sei noch darauf hingewiesen, daß das Eintreffen der von den beiden Mikroprozessoranordnungen PC1 und PC2 abgegebenen Quittungssignale (EQ1 bzw. EQ2) zeitlich überwacht wird. Dazu ist beispielsweise die in FIG 1 dargestellte Zähleranordnung Z benutzbar, die zwei gesonderte, den Mikroprozessoranordnungen zugeordnete, durch einen Taktgenerator gesteuerte Zähleinrichtungen aufweisen möge. Bei Abgabe eines Datensatzes an die Mikroprozessoranordnungen PC1 und PC2 werden diese Zähleinrichtungen jeweils von einem Anfangszustand in einen Zählzustand überführt, in welchem sie jeweils von einem Anfangszählerstand aus bis zu einem vorgegebenen Endzählerstand zählen. Dieser Endzählerstand legt die maximale Zeitspanne für das Eintreffen des Quittungssignals fest. Tritt ein Quittungssignal vor Erreichen dieses Endzählerstandes ein, so wird die in Frage kommende Zähleinrichtung vorzeitig wieder in ihren Anfangszustand überführt. Anderenfalls wird bei Erreichen des Endzählerstandes von der jeweiligen Zähleinrichtung ein Signal abgegeben, welches von der Datenvermittlungsanlage EDS als Quittungssignal für einen fehlerhaft empfangenen Datensatz bewertet wird. Damit laufen dann bei Auftreten eines solchen Signals die bereits anhand der FIG 3 erläuterten Übertragungsvorgänge ab.

Abschließend sei noch darauf hingewiesen, daß zwar vorstehend das Verfahren gemäß der vorliegenden Erfindung am Beispiel einer Datenvermittlungsanlage erläutert worden ist. Dieses Verfahren ist aber nicht nur auf derartige Anlagen beschränkt, sondern kann allgemein für Fernmeldevermittlungsanlagen benutzt werden, welche für die einzelnen Verbindungen ermittelte Informationen beispielsweise für eine Gebührenermittlung zu einer externen Informationsverarbeitungsanlage hin übertragen.

## Ansprüche

1. Verfahren zum Übertragen von über eine Fernmeldevermittlungsanlage(EDS), insbesondere eine Datenvermittlungsanlage, verlaufende Verbindungen betreffenden Informationen, welche in der Fernmeldevermittlungsanlage verbindungsindividuell ermittelt und in verbindungsindividuellen Datensätzen in einem Zwischenspeicher (PS) zwischengespeichert werden, zu einer mit der Fernmeldevermittlungsanlage verbundenen Informationsverarbeitungsanlage (RDE), welche jeweils über eine gesonderte Leitungsanordnung mit der Fernmeldevermittlungsanlage verbunden sind,
**dadurch gekennzeichnet,**
daß der Zwischenspeicher fortlaufend auf das Vorhandensein von Datensätzen überprüft wird,
daß bei Vorliegen mindestens eines Datensatzes in dem Zwischenspeicher von der Fernmeldevermittlungsanlage her ein Anforderungssignal an zwei gesonderte, der Informationsverarbeitungsanlage zugehörige Verarbeitungseinrichtungen (PC1, PC2), welche jeweils über eine gesonderte Leitungsanordnung mit der Fernmeldevermittlungsanlage verbunden sind, übertragen wird,
daß von den Verarbeitungseinrichtungen (PC1,PC2) auf ein derartiges Anforderungssignal hin bei deren Bereitschaft zur Aufnahme eines Datensatzes jeweils ein Bereitmeldungssignal abgegeben wird,
daß bei Eintreffen wenigstens eines Bereitmeldungssignals von der Fernmeldevermittlungsanlage (EDS) der als nächster zu übertragende Datensatz zu der jeweiligen Verarbeitungseinrichtung bzw. den Verarbeitungseinrichtungen übertragen wird, der in dieser bzw. diesen hinsichtlich einer fehlerfreien Übertragung überprüft und in eine der jeweiligen Verarbeitungseinrichtung zugeordnete Speicheranordnung (MP1 bzw. MP2) übernommen wird,
daß von der jeweiligen Verarbeitungseinrichtung bzw. den Verarbeitungseinrichtungen daraufhin ein den Empfang des gerade übernommenen Datensatzes betreffendes Quittungssignal abgegeben wird,
daß von der Fernmeldevermittlungsanlage bei Eintreffen lediglich eines einen fehlerfreien Empfang anzeigenden Quittungssignals ein Steuersignal an diejenige Verarbeitungseinrichtung (z. B. PC1) abgegeben wird, von der zuvor der Datensatz fehlerfrei empfangen worden ist,
und daß auf ein derartiges Steuersignal hin der in der betreffenden Verarbeitungseinrichtung fehlerfrei empfangene, in der zugehörigen Speicheranordnung gespeicherte Datensatz zusätzlich in die Speicheranordnung der anderen Verarbeitungseinrichtung (PC2) übertragen wird.

2. Verfahren nach Anspruch 1,
**dadurch gekennzeichnet,**
daß bei Eintreffen eines einen fehlerhaften Empfang eines Datensatzes anzeigenden Quittungsignals der betreffende Datensatz zumindest ein weiteres Mal zu der jeweiligen Verarbeitungseinrichtung (z. B. PC2) hin übertragen wird
und daß erst nach Auswerten des daraufhin von der jeweiligen Verarbeitungseinrichtung abgegebenen Quittungssignals in der Fernmeldevermittlungsanlage ggf. das genannte Steuersignal zu der anderen Verarbeitungseinrichtung hin (PC1) übertragen wird.

3. Verfahren nach Anspruch 1 oder 2,
**dadurch gekennzeichnet,**
daß auf eine Übertragung eines Datensatzes hin in einer Zeitüberwachungseinrichtung (Z) der Fernmeldevermittlungsanlage das Eintreffen von Quittungssignalen für die beiden Verarbeitungseinrichtungen gesondert zeitltich überwacht wird und daß ein vor dem Auftreten eines Quittungssignals den Ablauf einer maximal vorgegebenen Zeitspanne anzeigendes, von der Zeitüberwachungseinrichtung abgegebenes Signal als Quittungssignal für einen fehlerhaft empfangenen Datensatz bewertet wird.

4. Verfahren nach einem der Ansprüche 1 bis 3,
**dadurch gekennzeichnet,**
daß auf den Empfang eines Steuersignals durch eine der Verarbeitungseinrichtungen der von dieser zuvor empfangene und in der zugehörigen Speicheranordnung gespeicherte Datensatz sofort in die Speicheranordnung der anderen Verarbeitungseinrichtung übertragen wird.

5. Verfahren nach einem der Ansprüche 1 bis 3,
**dadurch gekennzeichnet,**
daß auf den Empfang eines Steuersignals durch eine der Verarbeitungseinrichtungen der von dieser zuvor empfangene und in der zugehörigen Speicheranordnung gespeicherte Datensatz für eine spätere Übertragung gekennzeichnet wird.

# FIG 1

# FIG 2

L1
[zu PC1]

L1
[von PC1]

L2
[zu PC2]

L2
[von PC2]

A

A

B

B

DS

DS

t

EQ1

EQ1

ST1

ST1

# FIG 3